# EUROPÄISCHE PATENTANMELDUNG

(11) **EP 1 291 615 A2**
(43) Veröffentlichungstag der Anmeldung: **12.03.2003**
(21) Anmeldenummer: 02019622.6
(22) Anmeldetag: 03.09.2002
(51) Int. Cl.: G01B 7/30

(54) **Magnetischer Positionssensor**

(30) Priorität: 04.09.2001 DE 10143398
(71) Anmelder: Pierburg GmbH, 41460 Neuss (DE)
(72) Erfinder: Bürger, Frank, 52355 Düren (DE); Ludwig, Norbert, 41379 Brüggen (DE)
(74) Vertreter: von Kirschbaum, Alexander, Dipl.-Ing.

(57) **Zusammenfassung**

Ein Positionssensor, der insbesondere zur Drehwinkelerfassung von Drosseloder Abgasklappen (10) geeignet ist, weist einen Dauermagneten (24) und mindestens zwei benachbart zu dem Dauermagneten (24) angeordnete Magnetfeldsensoren (32,33) auf. Bei den Magnetfeldsensoren (32,33) handelt es sich beispielsweise um Hall-Sensoren. Durch eine Relativbewegung zwischen den Dauermagneten (24) und den Magnetfeldsensoren (32,33) wird ein positionsabhängiges Signal, beispielsweise in Abhängigkeit eines Drehwinkels der Welle (14) erzeugt. Erfindungsgemäß sind die beiden Magnetfeldsensoren (32,33) in Feldrichtung des Dauermagneten (24) hintereinander angeordnet.

## Beschreibung

Die Erfindung betrifft einen Positionssensor, insbesondere einen Positionssensor zur Drehwinkelerfassung. Insbesondere betrifft die Erfindung einen Positionssensor zur Drehwinkelerfassung von Drosselklappen oder Abgasklappen in Abgasrückführsystemen.

Eine Vorrichtung zur Bestimmung des Drehwinkels, d.h. des Öffnungswinkel einer Drosselklappe ist in DE 199 03 490 beschrieben. Die Drosselklappe ist mit einer Schwenkwelle und über mehrere Zwischenelemente mit einem konzentrisch zur Schwenkwelle angeordneten Ringmagnet verbunden. Der Ringmagnet wird somit beim Schwenken der Drosselklappe mitgedreht. In einem Gehäusedeckel sind zwei Magnetfeldsensoren, wie beispielsweise Hall-Sensoren, angeordnet. Die beiden Sensoren sind außerhalb des Ringmagneten um 180° zueinander versetzt angeordnet. Von den beiden Sensoren werden zwei winkelabhängige Signale erzeugt. Die beiden von den Sensoren erzeugten Feldabwicklungskurven sind im Wesentlichen sinusförmig, wobei die Kurven in einem Winkelbereich von ±45° im Wesentlichen linear sind. Das Vorsehen eines Ringmagneten mit zwei außerhalb des Ringmagneten angeordneten Sensoren erfordert einen großen Bauraum. Dies ist insbesondere bei der Drehwinkelerfassung von Drossel- und Abgasklappen nachteilig, da diese in einem Bereich des Motors angeordnet sind, in dem wenig Platz vorhanden ist.

Aufgabe der Erfindung ist es, einen Positionssensor-, insbesondere zur Drehwinkelerfassung für Drossel- und Abgasklappen, mit geringem Platzbedarf zu schaffen.

Die Lösung der Aufgabe erfolgt erfindungsgemäß durch die Merkmale des Anspruchs 1.

Der erfindungsgemäße Positionssensor, der insbesondere zur Drehwinkelerfassung von Drossel- oder Abgasklappen geeignet ist, weist einen Dauermagneten und mindestens zwei benachbart zu dem Dauermagneten angeordnete Magnetfeldsensoren, wie beispielsweise Hall-Sensoren auf. Durch eine Relativbewegung zwischen dem Dauermagneten und den Magnetfeldsensoren wird ein Signal erzeugt, durch das die Position des Magneten relativ zu den Sensoren bestimmt werden kann. Durch das Vorsehen von zwei Sensoren können redundante Signale erzeugt werden, so dass auch bei Ausfall einer der beiden Sensoren zuverlässig ein Positionssignal erzeugt wird. Erfindungsgemäß sind die zwei Magnetfeldsensoren in Feldrichtung des Dauermagneten hintereinander angeordnet. Wird als Dauermagnet beispielsweise ein ringförmiger Magnet eingesetzt, wie er üblicherweise bei Positionssensoren zur Drehwinkelerfassung verwendet wird, so sind die beiden Magnetfeldsensoren vorzugsweise auf einer radialen Linie des ringförmigen Dauermagneten innerhalb oder außerhalb des Dauermagneten angeordnet.

Dadurch, dass die beiden Magnetfeldsensoren erfindungsgemäß hintereinander angeordnet sind, ist der erforderliche Platzbedarf verringert. Insbesondere ist es aufgrund der erfindungsgemäßen Anordnung der beiden Magnetfeldsensoren möglich, zur Drehwinkelerfassung anstatt eines ringförmigen Magneten nur ein Segment eines ringförmigen Magneten, insbesondere einen Halbkreis bzw. Halbringmägneten vorzusehen. Hierdurch sind zusätzlich die Kosten reduziert.

Ein wesentlicher Vorteil der erfindungsgemäßen Anordnung von zwei Magnetfeldsensoren besteht darin, dass beide Sensoren von demselben Magnetfeld durchströmt werden. Die Anregung der beiden Sensoren erfolgt somit durch dasselbe bzw. annähernd dasselbe Magnetfeld. Dies hat zur Folge, dass keine zu berücksichtigenden Abweichungen der von den zwei Sensoren abgegebenen Signale aufgrund unterschiedlicher Feldverläufe entstehen. Beispielsweise wird ein Fehler in dem Magnet von beiden Sensoren festgestellt. Es kann somit mit hoher Wahrscheinlichkeit festgestellt werden, dass ein Fehler im Magnet und nicht im Sensor aufgetreten ist. Bei Sensoren, die im Abstand voneinander angeordnet sind, lässt sich bei einem Fehler der im Magnet auftritt, nicht ohne weiteres feststellen, ob der Fehler im Magnet oder im Sensor aufgetreten ist. Dass beide hintereinander angeordnete Sensoren denselben Fehler aufweisen, ist äußerst unwahrscheinlich.

Vorzugsweise sind die beiden Magnetfeldsensoren mit einem gemeinsamen Flussdichte-Verstärker verbunden. Insbesondere kann es sich bei dem Flussdichte-Verstärker um ein Eisenplättchen handeln. Der flussdichten Verstärker ist vorzugsweise derart angeordnet, dass die Anzahl der Feldlinien, die durch die Magnetfeldsensoren verlaufen, erhöht wird.

Insbesondere um den Einbau der Magnetfeldsensoren zu erleichtern, sind die beiden Magnetfeldsensoren fest miteinander verbunden, insbesondere verklebt. Das Verkleben der beiden Magnetfeldsensoren hat ferner den Vorteil, dass die Lage der beiden Magnetfeldsensoren zueinander definiert ist. Vorzugsweise ist auch der gemeinsame Flussdichten-Verstärker zumindest mit einem der beiden Magnetfeldsensoren fest verbunden, insbesondere verklebt.

Das erfindungsgemäße Anordnen der zwei hintereinander angeordneten Sensoren erfüllt die Funktion der OBD II (On-board-Diagnose II). Insbesondere ist durch die erfindungsgemäße Anordnung der Sensoren ein Defekt des einen oder des anderen Sensors oder des Magneten gut unterscheidbar. Ferner sind die Kosten der erfindungsgemäßen Vorrichtung geringer.

Bei dem verwendeten Magneten handelt es sich vorzugsweise um einen diametral magnetisierten Magneten. Vorzugsweise wird ein Magnet verwendet, wie er in der unveröffentlichten DE 100 60 486 beschrieben ist.

Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht einer bevorzugten Ausführungsform der Erfindung,
- Fig. 2: eine schematische Schnittansicht entlang der Linie II-II in Fig. 1 und
- Fign. 3: ein Diagramm der beiden Sensorsignale der Magnetfeldsensoren.

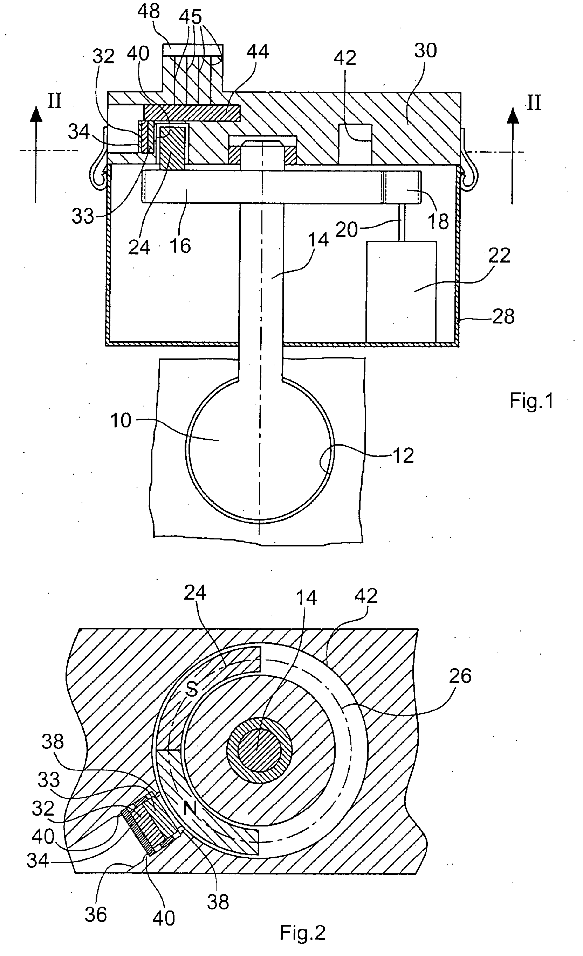

In den Fign. 1 und 2 ist die erfindungsgemäße Vorrichtung zur Drehwinkelerfassung mit einer Drossel- oder Abgasklappe 10 verbunden. Die Klappe 10 ist in einem Kanal 12 angeordnet und mittels einer Schwenkwelle 14 schwenkbar. Die Schwenkwelle 14 ist mit einem Zahnrad 16 verbunden, in das ein Ritzel 18 eingreift. Das Ritzel 18 ist über eine Welle 20 mit einer Antriebseinrichtung 22 verbunden. Durch Betätigen der Antriebseinrichtung 22 kann somit die Stellung der Klappe 10 in dem Kanal 12 verändert werden. Hierdurch ist die Durchflußmenge durch den Kanal 12 variierbar.

Zur Erfassung des Drehwinkels der Klappe 10 bzw. der Schwenkwelle 14 ist das Zahnrad 16 mit einem halbkreisförmigen Magneten 24 verbunden. Der Magnet 24 ist auf einer zur Schwenkwelle 14 konzentrischen Kreislinie 26 angeordnet.

Die Antriebseinrichtung 22, die Schwenkwelle 14 sowie das Zahnrad 16 und das Ritzel 18 sind in einem Gehäuse 28 angeordnet. Das Gehäuse 28 ist mit einem Deckel 30 verschließbar. Innerhalb des vorzugsweise aus Kunststoff bestehenden Deckels 30 sind zwei hintereinander angeordnete Magnetfeldsensoren 32,33, wie beispielsweise Hall-Sensoren, angeordnet. Beide Sensoren sind als berührungslose Sensoren ausgebildet und können vollständig in Kunststoff eingearbeitet sein.

Die beiden Magnetfeldsensoren 32,33 sind auf derselben Seite des Magneten 24 im dargestellten Ausführungsbeispiel außerhalb des Magneten 24 angeordnet und vorzugsweise an ihrer Berührungsfläche miteinander verklebt. Zur Verstärkung der Magnetfeldlinien ist ein flussdichter Verstärker 34 vorgesehen. Als flussdichten Verstärker 34 ist vorzugsweise eine Metallplatte vorgesehen, die mit dem Magnetfeldsensor 32 fest verbunden ist. Die beiden Magnetfeldsensoren 32,33 sind somit zwischen dem Flussdichten-Verstärker 34 und dem Magneten 24 angeordnet.

Zur Aufnahme der Magnetfeldsensoren 32,33 sowie des Flussdichten-Verstärkers 34 ist in dem Deckel 30, der als Teil eines Gehäuses des erfindungsgemäßen Positionssensors dient, eine Aufnahmeöffnung 36 vorgesehen. Die Aufnahmeöffnung 36 weist eine nach außen weisende Öffnung auf, so dass die beiden Magnetfeldsensoren 32,33 im dargestellten Ausführungsbeispiel zusammen mit dem Flussdichten-Verstärker 34 von außen in die Aufnahmeöffnung eingesteckt werden können. Zum Fixieren der Einheit aus den beiden Sensoren 32,33 und dem Verstärker 34 weist die im Querschnitt beispielsweise rechteckige Aufnahmeöffnung 36 zwei Anschläge 38 auf. Bei den Anschlägen 38 kann es sich auch um einen umlaufenden rahmenförmigen Anschlag handeln. Zusätzlich ist die Einheit aus den beiden Sensoren 32,33 und dem Verstärker 34 durch Rastelemente 40 fixiert, die in der Aufnahmeöffnung 36 angeordnet sind. Bei den Rastelementen 40 handelt es sich im dargestellten Ausführungsbeispiel um elastisch federnde Rastnasen, die beim Einschieben der Einheit 32,33,34 nach außen in den Deckel eingedrückt werden und in der dargestellten Lage der Einheit 32,33,34 in ihre Ausgangsstellung zurückschnappen.

Im montiertem Zustand ragt der Magnet 24 in eine in dem Deckel 30 vorgesehene kreisringförmige Öffnung 42.

Die beiden Sensoren 32,33 sind im dargestellten Ausführungsbeispiel mit einer in den Kunststoffdeckel 30 eingearbeiteten Platine 44 verbunden. Die Platine 44 ist über Leitungen 45 mit einem Steckkontakt 48 verbunden.

Anstatt einer in dem Deckel 30 eingegossenen Platine 44 können die Leitungen 45 auch unmittelbar mit den Sensoren 32,33 verbunden sein und aus der Aufnahmeöffnung 36 herausgeführt werden.

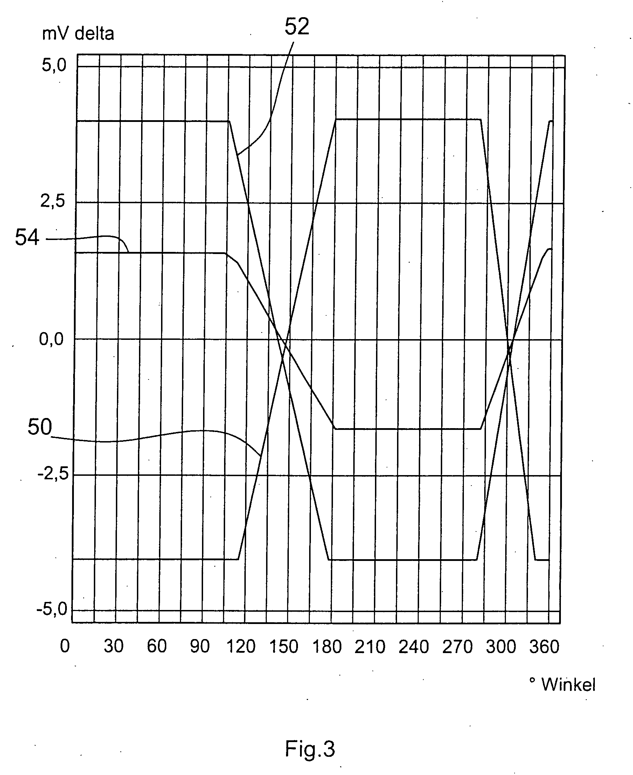

Von den beiden Sensoren 32,33 werden die in Fig. 3 dargestellten Signale 50 bzw. 52 erzeugt. Die beiden dargestellten Kurven sind beispielsweise innerhalb eines Bereichs von 110 - 180° im Wesentlichen linear fallend bzw. steigend. Innerhalb dieses Bereichs kann somit eine Winkelerfassung durch einen der beiden Sensoren 32,33 erfolgen. Auch bei Ausfall einer der beiden Sensoren 32,33 ist eine Winkelerfassung weiterhin möglich. Bei der bevorzugten Verwendung der erfindungsgemäßen Vorrichtung zur Drehwinkelerfassung von Drossel- oder Abgasklappen ist dieser Winkelbereich bei weitem ausreichend.

Die Kurve 54 zeigt die Gleichlaufabweichung in % der beiden Sensoren 32,33.

Wesentlich für die Erfindung ist, dass durch einen Sensorblock oder dgl., der in Form einer Blackbox vorgesehen sein kann, zwei Ausgangssignale erzeugt werden, die im Wesentlichen den Signalverlauf wie in Fig. 3 dargestellt haben.

In dieser Blackbox ist sodann vorzugsweise ein Doppelsensor wie vorstehend beschrieben, d.h. zwei Sensoren vorgesehen.

## Patentansprüche

1. Positionssensor, insbesondere zur Drehwinkelerfassung von Drossel- oder Abgasklappen (10), mit
einem Dauermagneten (24) und
mindestens zwei benachbart zu dem Dauermagneten (24) angeordneten Magnetfeldsensoren (32,33),
wobei durch eine Relativbewegung zwischen dem Dauermagneten (24) und den Magnetfeldsensoren (32,33) ein positionsabhängiges Signal (50,52) erzeugt wird,
**dadurch gekennzeichnet,**
**dass** die zwei Magnetfeldsensoren (32,33) in Feldrichtung des Dauermagneten (24) hintereinander angeordnet sind.

2. Positionssensor nach Anspruch 1, **dadurch gekennzeichnet, dass** die zwei Magnetfeldsensoren (32,33) mit einem gemeinsamen Flussdichten-Verstärker (34) verbunden sind.

3. Positionssensor nach Anspruch 2, **dadurch gekennzeichnet, dass** die Magnetfeldsensoren zwischen dem Flussdichten-Verstärker (34) und dem Dauermagneten (24) angeordnet sind.

4. Positionssensor nach einem der Ansprüche 1-3, **dadurch gekennzeichnet, dass** die zwei Magnetfeldsensoren (32,33) insbesondere durch Verkleben fest miteinander verbunden sind.

5. Positionssensor nach einem der Ansprüche 2-4, **dadurch gekennzeichnet, dass** der Flussdichte-Verstärker (34) insbesondere durch Verkleben fest mit einem der Magnetfeldsensoren (32) verbunden ist.

6. Positionssensor nach einem der Ansprüche 1-5, **gekennzeichnet durch** ein Gehäuse (28,30) mit einer Aufnahmeöffnung (36) zur Aufnahme der Magnetfeldsensoren (32,33) und ggf. des Flussdichten-Verstärkers (34), wobei die Aufnahmeöffnung (36) eine nach außen weisende Öffnung zum Einführen der Magnetfeldsensoren (32,33) und ggf. des Flussdichten-Verstärkers (34) aufweist.

7. Positionssensor nach Anspruch 6, **dadurch gekennzeichnet, dass** innerhalb der Aufnahmeöffnung (36) Rastelemente (40) zur Lagefixierung der Magnetfeldsensoren (32,33) und ggf. des Flussdichten-Verstärkers (34) vorgesehen sind.
